# EUROPÄISCHE PATENTSCHRIFT

(11) **EP 1 352 367 B1**
(45) Veröffentlichungstag und Bekanntmachung des Hinweises auf die Patenterteilung: **15.04.2009**
(21) Anmeldenummer: 02732106.6
(22) Anmeldetag: 09.01.2002
(51) Int. Cl.: G07B 15/00, G08G 1/01

(54) **DRAHTLOSE, INSBESONDERE MOBILE, KOMMUNIKATIONSEINRICHTUNG ZUR KOMMUNIKATION MIT KOMMUNIKATIONSGERÄTEN IN FAHRZEUGEN**
WIRELESS, ESPECIALLY MOBILE, COMMUNICATION DEVICE FOR COMMUNICATING WITH COMMUNICATION DEVICES IN VEHICLES
DISPOSITIF DE COMMUNICATION SANS FIL, NOTAMMENT MOBILE, DESTINE A LA COMMUNICATION AVEC DES TERMINAUX DE COMMUNICATION DANS DES VEHICULES

(30) Priorität: 17.01.2001 AT 772001
(43) Veröffentlichungstag der Anmeldung: 15.10.2003
(73) Patentinhaber: Efkon AG, 8045 Graz (AT)
(72) Erfinder: RIEDER, Helmut, A-8020 Graz (AT); PAMMER, Raimund, A-8020 Graz (AT)
(74) Vertreter: Sonn & Partner Patentanwälte
(86) Internationale Anmeldenummer: PCT/AT2002/000002
(87) Internationale Veröffentlichungsnummer: WO 2002/058012

(56) Entgegenhaltungen:
- EP-A- 0 613 108
- WO-A-94/00830
- WO-A-99/66455
- US-A- 5 144 553
- US-A- 5 485 520
- US-A- 5 963 149
- BLYTHE P T ET AL: "A SHORT-RANGE ROAD TO VEHICLE MICROWAVE COMMUNICATIONS LINK FOR AUTOMATIC DEBITING AND OTHER RTI SERVICES" ADVANCED TELEMATICS IN ROAD TRANSPORT. PROCEEDINGS OF THE DRIVE CONFERENCE, 4-6 FEBR. 1991, BRUSSELS, BE, AMSTERDAM, NL, Bd. 1, 1991, Seiten 248-268, XP000443997

## Beschreibung

Die Erfindung betrifft eine drahtlose mobile Infrarot-Kommunikationseinrichtung gemäß dem einleitenden Teil von Anspruch 1.

Zur drahtlosen Kommunikation mit Fahrzeugen auf Straßen, Autobahnen oder aber auch Parkplätzen sind bereits verschiedene Einrichtungen, je nach Zielvorstellung, vorgeschlagen worden. Grundsätzlich sind dabei die verschiedensten herkömmlichen Kommunikationstechniken denkbar, wie GSM, UMTS, GPRS, DSRC usw.. Insbesondere sind sodann aus der WO 99/33027 A sog. "virtuelle" Mautstationen bekannt, die mit Fahrzeugen, genauer mit fahrzeugseitigen Kommunikationsgeräten, beim Passieren dieser Mautstelle in bidirektionale Kommunikation eintreten, um die Bezahlung einer Maut durch Verknüpfen von Positionsinformationen, die beispielsweise über GPS erhalten werden, mit in einem Gerät gespeicherten Daten zu realisieren. Abgesehen davon, dass die Ortung der Fahrzeuge relativ unzuverlässig ist, liegt hier eine zumindest vorübergehend stationäre Mautstelle mit Kommunikationseinrichtung vor, wobei überdies die Kommunikation nur in einem Nahbereich, mit einer begrenzten Reichweite von üblicherweise unter 10 m, gegeben ist. Weiters sind die Kommunikationseinrichtungen derart ausgelegt, dass sie die gesamte Breite einer Fahrbahn erfassen, wobei im Fall von mehreren Fahrspuren je Fahrbahn und dementsprechend von mehreren sich auf verschiedenen Fahrspuren bewegenden Fahrzeugen, eine spezielle Technik zur Unterscheidung der einzelnen Fahrzeuge auf den verschiedenen Fahrspuren (das sog. "Matching") erforderlich ist.

Eine vergleichbare Technik mit stationären Mautstellen-Kommunikationseinrichtungen, die je einer Fahrbahn zugeordnet sind und über Funk mit mobilen Kommunikationseinrichtungen in Fahrzeugen kommunizieren, ist in der WO 94/00830 A geoffenbart.

Aus der WO 99/66455 ist weiters eine straßenseitige Kontrolleinrichtung für ein in einem Fahrzeug installiertes Mautgerät bekannt, welches vom Straßenrand her quer zur Fahrtrichtung, somit über kurze Distanzen, mit den Fahrzeugen kommuniziert. Dabei wird DSRC als bevorzugte Kommunikationstechnik angeführt, optische Übertragungsverfahren werden jedoch wegen ihrer Empfindlichkeit gegenüber körperlichen Hindernissen eher abgelehnt.

Es wäre nun wünschenswert, eine insbesondere mobile, selektive, gezielt arbeitende Infrarot-Kommunikationseinrichtung für eine drahtlose Kommunikation mit ausgewählten fahrzeugseitigen Kommunikationsgeräten (sog. OBU-On-Board Unit) an beliebigen Stellen entlang Straßen oder auf Parkplätzen zu ermöglichen, beispielsweise um auf einer mautpflichtigen Autobahn - vergleichbar einer Geschwindigkeitsmessung mit einem mobilen Lasergerät - eine Überprüfung vornehmen zu können, ob für das betreffende Fahrzeug eine Maut-Transaktion durchgeführt wurde oder ob eine Parkgebühr entrichtet wurde. Die mobile Infrarot-Kommunikationseinrichtung soll dabei als tragbares Gerät in der Art einer Laserpistole, gegebenenfalls auch als Fahrzeugeinrichtung in einem Überprüfungsfahrzeug, realisierbar sein.

Es ist demgemäß Aufgabe der Erfindung, eine drahtlose Infrarot-Kommunikationseinrichtung für einen gezielten Datenaustausch mit einem fahrenden oder stehenden Fahrzeug von beliebigen Stellen aus, von einer Person oder aber von einem Fahrzeug aus, vorzusehen, wobei eine selektive Kommunikation mit dem jeweiligen zu überprüfenden Fahrzeug auch aus größeren Entfernungen möglich sein soll.

Zur Lösung dieser Aufgabe sieht die Erfindung eine drahtlose Infrarot-Kommunikationseinrichtung wie in Anspruch 1 angegeben vor.

Vorteilhafte Ausführungsformen sind in den Unteransprüchen definiert.

Bei der vorliegenden Kommunikationseinrichtung sind somit ein IR-Empfänger und/oder ein aktiver IR-Sender mit einer definierten engen Empfangs- bzw. Abstrahlungscharakteristik vorgesehen, welche auf die Selektivität von Fahrzeugen bei der gegebenen Reichweite von 20 m bis 200 m, z.B. 100 m oder 150 m, abgestimmt ist. Die IR-Kommunikationseinrichtung kann dabei mit einem Empfangswinkel bzw. Abstrahlungswinkel von 0,5° bis 4°, vorzugsweise 0,8° bis 2,5°, vorgesehen sein. Die Kommunikation ist im optischen Bereich, nämlich im Infrarot-Bereich, vorgesehen, wobei dem IR-Sender bzw. IR-Empfänger eine Optik zur Erzielung der engen Richtcharakteristik, d.h. Strahlbündelung bzw. Empfangsbegrenzung, zugeordnet ist, so dass mit dieser Optik ein eng gebündelter IR-Strahl erzielt wird.

Mit der - optischen - Visiereinheit kann ähnlich wie mit einem tragbaren Lasergerät das jeweilige Fahrzeug anvisiert werden, und auf die vorgesehene Entfernung, z.B. 100 m, erreicht das ausgesendete Wellenbündel exakt nur dieses eine Fahrzeug, während andere Fahrzeuge, z.B. auf benachbarten Fahrspuren, nicht erfasst (oder aber ausgeblendet) werden. Dadurch ist eine selektive Kommunikation im Hinblick auf den gewünschten Datenaustausch auf einfache Weise möglich. Der Datenaustausch wird dabei z.B. zwecks Überprüfung von - elektronisch - entrichteten Maut- oder Parkgebühren verwendet, wobei davon ausgegangen wird, dass in den Fahrzeugen jeweils eine sog. OBU-Einheit installiert ist. Diese fahrzeugseitigen Kommunikationsgeräte (OBUs) befinden sich normalerweise in einem Standby(Schlaf-)Zustand, und sie werden bei der angesprochenen Überprüfung aktiviert, um die gewünschten Daten an die mobile Kommunikationseinrichtung zu übertragen.

Um die Daten bzw. allgemein Informationen über den Ablauf der Kommunikation anzuzeigen, etwa wenn eine Verbindung mit einem Fahrzeug nicht hergestellt werden kann, ist es von Vorteil, wenn die Anzeigeeinheit eine optische Anzeigeeinrichtung, ein Display, insbesondere ein LCD-Display, aufweist. Anstattdessen oder aber bevorzugt zusätzlich kann auch eine akustische Anzeigeeinrichtung, z.B. ein Summer, vorgesehen sein, um beispielsweise bei Herstellung einer Kommunikationsverbindung oder im Falle, dass keine Kommunikationsverbindung zustande kommt, durch unterschiedliche Summtöne eine entsprechende akustische Anzeige für die Bedienungsperson zu ermöglichen.

Die vom fahrzeugseitigen Kommunikationsgerät übertragenen und von der Kommunikationseinrichtung empfangenen Daten werden in an sich üblicher Weise in der dem Empfänger nachgeordneten Verarbeitungseinheit aufbereitet, um eine Anzeige dieser Daten zu ermöglichen, und diese Verarbeitungseinheit kann vorteilhafterweise durch einen Prozessor gebildet sein, der die Daten in ein entsprechendes Format für die Anzeige bzw. auch für eine andere Ausgabe, wie an sich herkömmlich, bringen kann.

Die dem IR-Sender zugeordnete Steuereinheit hat die Aufgabe, den IR-Sender in der gewünschten Weise für die Aussendung der elektromagnetischen Wellen zur Herstellung der gewünschten Kommunikation zu veranlassen, wobei diese Aktivierung des IR-Senders möglichst selbsttätig ablaufen soll; zu diesem Zweck ist es günstig, wenn die Steuereinheit für den IR-Sender durch einen Prozessor gebildet ist, vorzugsweise durch denselben Prozessor, der die Verarbeitungseinheit bildet. Von Vorteil ist es dabei weiters, wenn der Prozessor mit einem Speicher für zu sendende bzw. zu empfangende Informationen versehen ist. Weiters ist es auch vorteilhaft, wenn der Prozessor mit einer Eingabeeinheit, insbesondere Tasten, zur Eingabe von Informationen und Instruktionen verbunden ist. Dadurch können je nach Wunsch, beispielsweise je nach Aufstellungsort der mobilen Kommunikationseinrichtung und nach Art der Abfrage, spezifische Informationen bzw. Abfragedaten vorbereitet werden, die dann im Überprüfungsfall ausgesendet werden. Hierzu kann beispielsweise auch die dem Aufstellungsort, zugehörige nächste Autobahn-Mautstelle durch Daten identifiziert werden.

Wie bereits erwähnt soll die Übertragung, d.h. Aussendung der Abfrageinformationen, möglichst selbsttätig ablaufen, wobei jedoch ein gezieltes Auslösen des Sendevorgangs - z.B. bei Annähern eines Fahrzeuges - möglich sein soll, und demgemäß ist es von Vorteil, wenn der Steuereinheit für den IR-Sender ein Abzug-artiger Schalter zum Triggern des IR-Senders zwecks Abgabe von elektromagnetischen Wellen zugeordnet ist.

Für den automatischen Sendeablauf ist der Steuereinheit für den IR-Sender, gegebenenfalls dem Prozessor, ein Speicher für vorgegebene Sendesignal-Informationen, mit einem Aufweck-Signal für das Fahrzeug-Kommunikationsgerät und mit Befehlssignalen für das Fahrzeug-Kommunikationsgerät, um dieses zur Identifizierung und zur Abgabe von gespeicherten Informationen, wie insbesondere Zustandsinformationen und Informationen über Maut-Transaktionen zu veranlassen, zugeordnet.

Für die Überprüfung, gegebenenfalls für eine Dokumentation, ist es auch günstig, wenn eine von einem Taktsignal-Generator des Prozessors gespeiste Datums- und Uhrzeit-Anzeige vorgesehen ist. Im Falle einer Überprüfung können die vom fahrzeugseitigen Kommunikationsgerät empfangenen Daten dann zusammen mit Angaben betreffend Datum und Uhrzeit festgehalten und beispielsweise über einen im tragbaren Gerät enthaltenen oder externen Drucker als Protokoll ausgedruckt werden. Selbstverständlich ist es aber auch denkbar, die empfangenen Daten zusammen mit den zeitdaten zunächst in einem Speicher abzuspeichern und später über einen externen Drucker, gegebenenfalls nach Anschließen an einen PC mit Drucker, auszugeben.

Um die Angaben betreffend die jeweils nächste, der Überwachungsstelle zugehörigen Mautstelle auf längere Zeit festhalten zu können, ist die Kommunikationseinrichtung zweckmäßigerweise mit einem Speicher zur Speicherung einer Mautstellen-Identifikation versehen.

Die Erfindung wird nachfolgend anhand von in der Zeichnung veranschaulichten bevorzugten Ausführungsbeispielen, auf die sie jedoch nicht beschränkt sein soll, noch weiter erläutert. Es zeigen:
Fig.1 schematisch in Draufsicht auf einen Teil des Verkehrsweges mit drei Fahrspuren, mit Fahrzeugen und mit einer mobilen Kommunikationseinrichtung gemäß der vorliegenden Erfindung;
Fig.2 schaubildlich eine Kommunikationseinrichtung gemäß der vorliegenden Erfindung in Form eines tragbaren Gerätes;
Fig.3 schematisch, teilweise in einem Blockschaltbild, eine erfindungsgemäße Kommunikationseinrichtung zusammen mit einem mit ihr kommunizierenden fahrzeugseitigen Kommunikationsgerät; und
Fig.4 ein Ablaufdiagramm zum Veranschaulichen des Vorgangs bei einem Datenaustausch im Zuge einer selektiven Kommunikation zwischen der vorliegenden Kommunikationseinrichtung und einem fahrzeugseitigen Kommunikationsgerät.

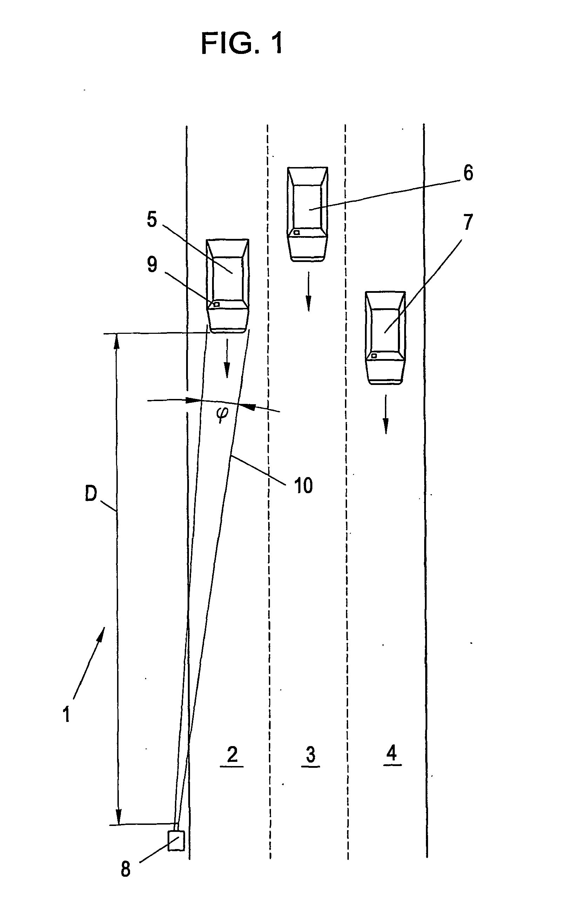

In Fig.1 ist schematisch ein Verkehrsweg 1 mit drei Fahrspuren 2, 3, 4 veranschaulicht, auf denen sich Fahrzeuge 5, 6, 7 befinden. Am Rand des Verkehrsweges 1 ist eine mobile Drahtlos-Kommunikationseinrichtung 8 gezeigt, die sich in selektiver Kommunikation mit einem fahrzeugseitigen Kommunikationsgerät 9 in einem der Fahrzeuge, beispielsweise im Fahrzeug 5, befindet; dies ist durch einen engen, gebündelten Infrarot-Strahl 10 schematisch in Fig.1 angedeutet.

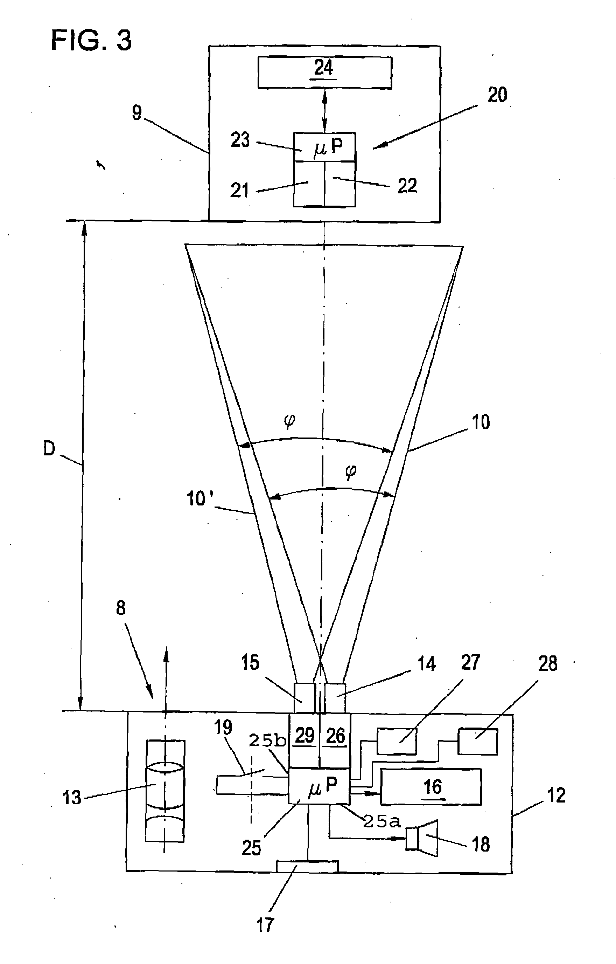

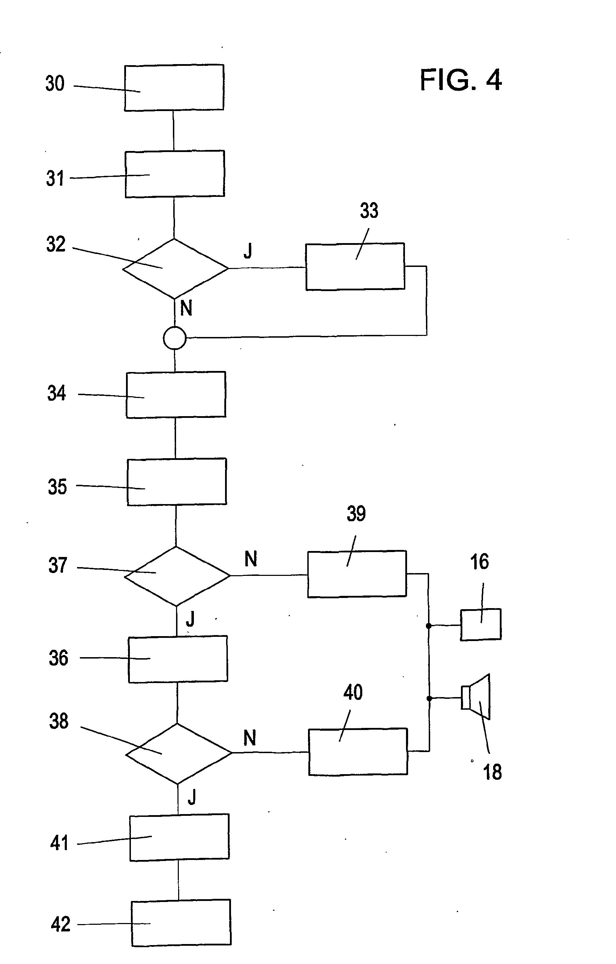

Der Abstand D zwischen der mobilen Kommunikationseinrichtung 8 und dem Fahrzeug 5 beträgt beispielsweise ca. 100 m, wobei die Abstrahlungscharakteristik (s. das enge Bündel 10) der Kommunikationseinrichtung 8 auf die Selektivität in der Kommunikation mit Fahrzeugen in einem derartigen Abstand D, entsprechend der höchsten definierten Reichweite, abgestimmt ist, d.h. der Winkel ϕ der Abstrahlungs- und auch Empfangscharakteristik ist entsprechend klein, etwa in der Größenordnung von 2°, allgemein z.B. zwischen 0,5° und 4° oder 5°. Im Falle einer Reichweite von 200 m ist daher der Strahl 10 mit einem entsprechend kleineren Abstrahlungswinkel als im Fall einer Reichweite von 100 m oder aber von bloß 50 m abzustrahlen, d.h. eine noch engere Richtcharakteristik für den Sender und den Empfänger der Kommunikationseinrichtung 8 vorzusehen. Dadurch wird erreicht, dass selektiv nur das eine gewünschte Fahrzeug, z.B. 5 in Fig.1, erfasst wird, jedoch werden andere Fahrzeuge, z.B. auf den anderen Spuren 3, 4, nicht erfasst, so dass ein ungestörter Datenaustausch mit dem gewünschten einen Fahrzeug 5 erfolgen kann. Ein derartiger Datenaustausch ist z.B. im Zuge einer Überprüfung dessen erwünscht, ob das Fahrzeug 5 beim vorhergehenden Passieren einer Mautstelle eine Maut-Transaktion zur Entrichtung einer vorgeschriebenen Mautgebühr durchgeführt hat. Demgemäß ist das fahrzeugseitige Kommunikationsgerät 9 durch die Kommunikationseinrichtung 8 zu aktivieren (aufzuwecken) und zur Abgabe einer Identifikation sowie zur Übersendung der gewünschten Informationen betreffend vorhergehende Maut-Transaktionen zu veranlassen. Dieser Vorgang wird nachfolgend anhand insbesondere der Figuren 3 und 4 noch näher erläutert werden.

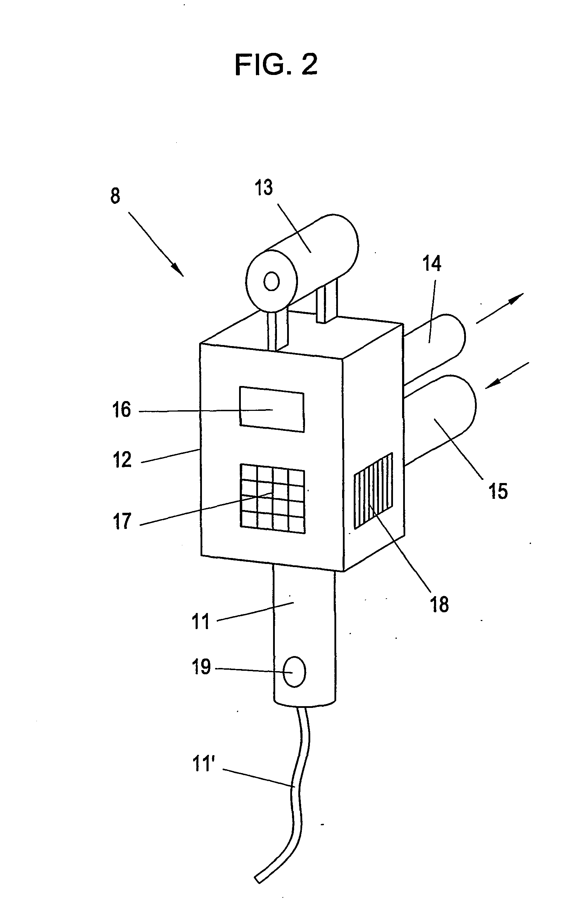

In Fig.2 ist eine als tragbares Handgerät ausgeführte mobile Drahtlos-Kommunikationseinrichtung 8 gezeigt, wobei auf einem Haltegriff 11, durch den elektrische Anschlusskabel 11' (für Energieversorgung und gegebenenfalls Datenübertragung) laufen, ein Gehäuse 12 vergleichbar jenem bei sog. Laser-Pistolen angebracht ist. An der Oberseite des Gehäuses 12 ist eine optische Visiereinheit 13 angebracht, mit der das gewünschte Fahrzeug, z.B. 5 (Fig.1), selektiv anvisiert werden kann, um dann das Sendebündel 10 (Fig.1) über einen in Fig.2 nicht näher ersichtlichen Sender und eine Fokussierungsoptik 14 abzugeben. Zum Empfang von vom jeweiligen fahrzeugseitigen Kommunikationsgerät 9 zurückgesendeten Wellenbündeln ist eine vergleichbare Optik 15 mit engem Empfangswinkel vorgesehen, die dem eigentlichen Empfänger im Inneren des Gehäuses 12 vorgeschaltet ist.

Auf der, der Bedienungsperson (nicht gezeigt) zugewandten Rückseite des Handgeräts ist ein LCD-Display 16 als optische Anzeigeeinheit vorgesehen; weiters befindet sich an dieser Rückseite des Gerätes unterhalb des LCD-Displays 16 eine Eingabetastatur 17, um der im Gehäuse 12 enthaltenen Steuereinheit, die insbesondere mit einem Mikroprozessor ausgeführt ist, entsprechende Eingabedaten zuführen zu können.

An der Seite des Gehäuses 12 befindet sich im gezeigten Ausführungsbeispiel ein Summer-Lautsprecher 18, um als akustische Anzeige bestimmte vorgegebene Summtöne, je nach Zustandekommen oder Nicht-Zustandekommen einer Kommunikation mit einem Fahrzeug, abzugeben.

Die Kommunikationseinrichtung 8 ist weiters mit einem Abzugartigen Schalter 19 versehen, um den Sender zu triggern, d.h. zur Abgabe von elektromagnetischen Wellen zu veranlassen. Dieser Schalter 19 kann sich an einer beliebigen geeigneten Stelle am Gehäuse 12 oder aber vorzugsweise am Griff 11 befinden, um beispielsweise mit dem Daumen eine Betätigung in komfortabler Weise zu ermöglichen.

In Fig.3 ist bei 8 die vorliegende mobile drahtlose Kommunikationseinrichtung und bei 9 in einem nicht maßstäblichen Abstand D ein fahrzeugseitiges Kommunikationsgerät gezeigt. Das fahrzeugseitige Kommunikationsgerät 9 wird üblicherweise als OBU-Einheit (On-Board Unit) bezeichnet, und es enthält eine Kommunikationsschaltung 20 mit einem Sender 21 und einem Empfänger 22 sowie einem Mikroprozessor 23. Dem Mikroprozessor 23 ist weiters ein Speicher 24 zugeordnet, in dem alle die verschiedenen Maut-Transaktionen betreffenden Daten ebenso wie eine Identifikationsnummer und dergleichen gespeichert sind.

In der mobilen Kommunikationseinrichtung 8 ist innerhalb des Gehäuses 12 ein mit dem Schalter 19 verbundener Mikroprozessor 25 vorgesehen, der als Steuereinheit 25a für einen Sender 26 fungiert. Weiters sind mit dem Mikroprozessor 25 ein Speicher 27 für Daten entsprechend den zu sendenden Signalen sowie ein Speicher 28 zum Speichern von über einen Empfänger 29 empfangenen und von dem - auch als Verarbeitungseinheit 25b fungierenden - Mikroprozessor 25 aufbereiteten Daten verbunden. Schematisch sind in Fig.3 weiters die Optiken 14 bzw. 15 zur Erzielung der engen Richtcharakteristiken 10 bzw. 10', mit einem Öffnungswinkel bzw. Empfangswinkel ϕ in der Größenordnung von beispielsweise 0,5° bis 5°, insbesondere 0,8° bis 2,5°, dargestellt. Der Winkel ϕ ergibt sich aus der vorgesehenen maximalen Reichweite, entsprechend der maximalen Distanz D, wobei der Durchmesser, d.h. die Breiten-Abmessung, des abgegebenen Strahlenbündels 10 an der Stelle des Fahrzeuges maximal ungefähr eine Fahrspurbreite, also beispielsweise ca. 3 m, betragen sollte. Damit wird die gewünschte Selektivität für die Erfassung nur eines Fahrzeuges 5 im Bereich der maximalen Reichweite (die bei 100 m oder aber auch 200 m liegen kann) sichergestellt, d.h. es wird verhindert, dass unerwünschte Fahrzeuge, die sich auf anderen Fahrspuren oder aber in der selben Fahrspur vor oder hinter dem ausgewählten Fahrzeug befinden, erfasst werden. Es sei hier erwähnt, dass im Fall einer Überprüfung von parkenden Fahrzeugen auch noch kleinere Reichweiten, z.B. 20 m oder 50 m, reichen können, wobei dann auch der Winkel ϕ entsprechend größer sein kann.

In Fig.3 sind sodann noch das LCD-Display 16 sowie der Lautsprecher 18 schematisch dargestellt. Im Falle der Abfrage einer OBU 9 wird die Kommunikationseinrichtung 8 über die Visiereinheit 13 auf das zu überprüfende Fahrzeug gerichtet, in dem oder auf dem die abzufragende OBU 9 montiert ist, also beispielsweise auf das Fahrzeug 5 in Fig.1. Beim Drücken des Abzugartigen Schalters 19 wird der Sender 26 aktiviert, so dass er die OBU 9 im Fahrzeug 5 mit einem "Aufweck"-Befehl aus dem Standby-Zustand in den aktiven Zustand bringt. Die OBU 9 kann nunmehr im betriebsbereiten Zustand auf vom Sender 26 gesendete Abfragebefehle, wie z.B. "Melde-Status", oder "letzte Transaktion auslesen", entsprechende Daten an die Kommunikationseinrichtung 8 zurücksenden, wobei im Zuge dieser Kommunikation sichergestellt ist, dass selektiv nur Daten aus der anvisierten OBU 9 empfangen werden. Zumindest Teile der empfangenen Daten bzw. aufbereitete Daten werden auf dem LCD-Display 16 angezeigt, und das Ergebnis der Datenkommunikation ("richtig", "falsch", "keine Daten") wird auch akustisch durch verschiedene Summtöne über den Lautsprecher 18 signalisiert.

Fahrzeugseitige Kommunikationsgeräte (OBUs) 9 von anderen Fahrzeugen werden bei dieser selektiven Kommunikation nicht aktiviert; sofern andere OBUs 9 senden sollten, werden sie aufgrund der engen Empfangscharakteristik der Kommunikationseinrichtung 8, s. Richtcharakteristik 10' in Fig.3, nicht wahrgenommen bzw. ausgeblendet. Insofern ist vor allem die Empfangscharakteristik eng festzulegen, wobei die Sendecharakteristik theoretisch dann auch weniger eng ausgelegt sein kann - sofern vom Sender 26 auch die OBUs von anderen Fahrzeugen "aufgeweckt" werden, empfängt der Empfänger 29 deren Signale nicht. Umgekehrt ist es aber auch denkbar, nur den Sender 26 mit einer schmalen Abstrahlungscharakteristik zu entwerfen, wenn andere Fahrzeug-OBUs nicht senden können und nur die gewünschte eine OBU 9 "geweckt" wird, so dass sichergestellt ist, dass nur von der gewünschten einen OBU 9 Signale empfangen werden, auch wenn der Empfänger 29 eine breitere Empfangscharakteristik hat. Bevorzugt haben jedoch für die gewünschte Selektivität sowohl der Sender 26 als auch der Empfänger 29 die angegebene enge Richtcharakteristik.

Die OBU 9 im bzw. am Fahrzeug 5 (bzw. 6, 7) ist in üblicher Weise mit beispielsweise einer Nahbereichs-Kommunikationseinrichtung 20 ausgestattet, also einer sog. DSRC-Kommunikationseinrichtung, und im Speicher 24 sind die jeweils relevanten Daten, die von der Kommunikationseinrichtung 8 abgefragt werden können, gespeichert. Diese Daten können beispielsweise die letzten zwanzig Maut-Transaktionen betreffen, aber auch eine Parkgenehmigung, einen elektronischen Zulassungsschein usw.. Wenn die OBU 9 einen Abfragebefehl (Kommunikationsbefehl) von der Kommunikationseinrichtung 8 empfängt, so antwortet sie entsprechend dem Abfragebefehl, indem sie die gewünschten Daten über die Nahbereichs-Kommunikationseinrichtung 20 abgibt. Die Sende-Empfangscharakteristik der OBU 9 ist dabei nicht vergleichbar eng ausgelegt, was aber der vorliegenden Anwendung genügt, da die Empfangscharakteristik 10' der mobilen Kommunikationseinrichtung 8 entsprechend eng ist, so dass Daten nur von der anvisierten OBU 9 empfangen werden können.

Schematisch ist in Fig.3 auch die mit dem Mikroprozessor 25 verbundene Tastatur 17 zur Eingabe von Daten, wie insbesondere von Identifizierungsdaten betreffend die nächste Mautstelle zwecks Speicherung im Speicher 27, angedeutet.

Der Sender 26 und der Empfänger 29 können in an sich herkömmlicher und hier nicht näher zu erläuternder Weise, als Infrarot-Sender bzw. Infrarot-Empfänger mit den gewünschten optischen Elementen (IR-Diode und fotoempfindliche Diode sowie zugehörige Elektronik für eine gepulste Betriebsweise) ausgebildet sein.

Aus Fig.4 ergibt sich der Ablauf bei einer Abfrage zur Überprüfung einer OBU 9 in einem Fahrzeug 5, wobei nach dem Einschalten der Kommunikationseinrichtung 8 (s. Block 30 in Fig.4) und einer Bereit-Anzeige am Display 16 gemäß Block 31 abgefragt wird, s. Feld 32 in Fig.4, ob Einstellungen etwa betreffend Datum und Uhrzeit oder aber betreffend Mautstellen-Identifikation gewünscht werden. Wenn ja, wird gemäß Block 33 eine entsprechende Dateneingabe über die Tastatur 17 vorgenommen, und die Einrichtung befindet sich dann in einer wartestellung, die auch erreicht wird, wenn keine Einstellungen gewünscht sind.

Wenn ein Fahrzeug anvisiert und eine selektive Kommunikation mit dessen OBU 9 gewünscht wird, erfolgt durch Betätigen des Schalters 19 ein Triggern des Senders 26 der Kommunikationseinrichtung 8, wie in Fig.4 bei 34 veranschaulicht ist. Demgemäß werden Aufwecksignale und Abfragesignale, gemäß Block 35 bzw. 36 in Fig.4, an die OBU 9 gesendet, und danach wird jeweils abgefragt, ob eine Antwort, wie die OBU-Identifikation (s. Feld 37) bzw. die gewünschten Daten (s. Feld 38) empfangen wurden. Wenn nein, wird jeweils eine Fehleranzeige ausgelöst, s. die Blöcke 39 und 40, wobei diese Fehleranzeigen akustisch, durch verschiedene Summsignale, erfolgen, welche über den Lautsprecher 18 abgegeben werden. Parallel dazu wird eine optische Anzeige über die LCD-Anzeigeeinheit 16 veranlasst.

Wenn die OBU-Identifikation erfolgt ist und die gewünschten Daten empfangen werden, so werden diese gemäß Block 41 gespeichert und gegebenenfalls über einen nicht näher gezeigten Drucker ausgegeben, und der Vorgang wird schließlich gemäß Block 42 als ordnungsgemäß abgeschlossen bestätigt.

## Patentansprüche

1. Drahtlose mobile Infrarot(IR)-Kommunikationseinrichtung (8), eingerichtet zur Kommunikation mit IR-Kommunikationsgeräten (9) in Fahrzeugen (5, 6, 7), mit einem eine IR-Diode enthaltenden IR-Sender (26) und mit einem eine fotoempfindliche Diode enthaltenden IR-Empfänger (29) für Informationen enthaltende elektromagnetische Wellen sowie mit einer Steuereinheit (25a) zum Ansteuern des IR-Senders (26), **dadurch gekennzeichnet, dass** der IR-Sender (26) und/oder der IR-Empfänger (29) eine Fokussierungsoptik (14, 15) aufweist, die dazu eingerichtet ist, dass ihre Richtcharakteristik (10, 10') für eine jeweils definierte maximale Distanz (D) zwischen 20 m und 200 m zwischen dem IR-Sender (26) und IR-Kommunikationsgeräten (9) in Fahrzeugen (5, 6, 7) derart eng abstimmbar ist, dass eine selektive Kommunikation mit einem selektierten IR-Kommunikationsgerät eines Fahrzeuges erfolgen kann, dass eine optische Visiereinheit (13) sowie eine mit dem IR-Empfänger (29) über eine Verarbeitungseinheit (25b) verbundene Anzeigeeinheit (16, 18) vorgesehen sind, und dass der Steuereinheit (25a) für den IR-Sender (26) ein Speicher (28) für vorgegebene Sendesignal-Informationen, mit einem Aufweck-Signal für das Fahrzeug-Kommunikationsgerät (9) und mit Befehlssignalen für das Fahrzeug-Kommunikationsgerät (9), um dieses zur Identifizierung und zur Abgabe von gespeicherten Informationen, wie insbesondere Zustandsinformationen und Informationen über Maut-Transaktionen zu veranlassen, zugeordnet ist.

2. Kommunikationseinrichtung nach Anspruch 1, **dadurch gekennzeichnet, dass** die Richtcharakteristik für eine selektive Kommunikation auf Entfernungen in der Größenordnung von ca. 100 m festgelegt ist.

3. Kommunikationseinrichtung nach Anspruch 1 oder 2, **dadurch gekennzeichnet, dass** der IR-Empfänger mit einem Empfangswinkel von 0,5° bis 4° vorgesehen ist.

4. Kommunikationseinrichtung nach Anspruch 3, **dadurch gekennzeichnet, dass** der Empfangswinkel 0,8° bis 2,5° beträgt.

5. Kommunikationseinrichtung nach einem der Ansprüche 1 bis 4, **dadurch gekennzeichnet, dass** der IR-Sender mit einem Abstrahlungswinkel von 0,5° bis 4° vorgesehen ist.

6. Kommunikationseinrichtung nach Anspruch 5, **dadurch gekennzeichnet, dass** der Abstrahlungswinkel 0,8° bis 2,5° beträgt.

7. Kommunikationseinrichtung nach einem der Ansprüche 1 bis 6, **dadurch gekennzeichnet, dass** die Anzeigeeinheit (16, 18) ein Display, insbesondere ein LCD-Display (16), aufweist.

8. Kommunikationseinrichtung nach einem der Ansprüche 1 bis 7, **dadurch gekennzeichnet, dass** die Anzeigeeinheit (16, 18) eine akustische Anzeigeeinrichtung, z.B. einen Summer (18), aufweist.

9. Kommunikationseinrichtung nach einem der Ansprüche 1 bis 8, **dadurch gekennzeichnet, dass** die Verarbeitungseinheit (25b) durch einen Prozessor (25) gebildet ist.

10. Kommunikationseinrichtung nach einem der Ansprüche 1 bis 9, **dadurch gekennzeichnet, dass** die Steuereinheit (25a) für den Sender durch einen Prozessor (25) gebildet ist, vorzugsweise durch denselben Prozessor (25), der die Verarbeitungseinheit (25b) bildet.

11. Kommunikationseinrichtung nach Anspruch 9 oder 10, **dadurch gekennzeichnet, dass** der Prozessor (25) mit einem Speicher (27, 28) für zu sendende bzw. zu empfangende Informationen versehen ist.

12. Kommunikationseinrichtung nach Anspruch 10 oder 11, **dadurch gekennzeichnet, dass** der Prozessor (25) mit einer Eingabeeinheit (17), insbesondere Tasten, zur Eingabe von Informationen und Instruktionen verbunden ist.

13. Kommunikationseinrichtung nach einem der Ansprüche 1 bis 12, **dadurch gekennzeichnet, dass** der Steuereinheit für den IR-Sender (26) ein Abzug-artiger Schalter (19) zum Triggern des IR-Aenders (26) zwecks Abgabe von elektromagnetischen Wellen zugeordnet ist.

14. Kommunikationseinrichtung nach einem der Ansprüche 9 bis 13, **dadurch gekennzeichnet, dass** eine von einem Taktsignal-Generator des Prozessors (25) gespeiste Datums- und Uhrzeit-Anzeige vorgesehen ist.

15. Kommunikationseinrichtung nach einem der Ansprüche 1 bis 14, **gekennzeichnet durch** einen Speicher (27) zur Speicherung einer Mautstellen-Identifikation.

## Claims

1. A wireless mobile infra-red (IR) communication device (8) for communicating with IR communication units (9) in vehicles (5, 6, 7), comprising an IR transmitter (26), which includes an IR diode, and comprising an IR receiver (29), which includes a photosensitive diode, for information-containing electromagnetic waves, as well as comprising a control unit (25a) for controlling the IR transmitter (26), **characterized in that** the IR transmitter (26) and/or the IR receiver (29) has a focussing optics (14, 15) which is configured to have a directional characteristic (10, 10') for a respectively defined maximum distance (D) of between 20 m and 200 m between the IR transmitter (26) and the IR communication units (9) in vehicles (5, 6, 7) which is adjustable such narrowly that a selective communication with a selected IR communication unit of a vehicle is possible, **in that** an optic sighting unit (13) as well as an indication unit (16, 18) connected to the IR receiver (29) via a processing unit (25b) are provided, and **in that** a memory (28) for preset transmission-signal information is associated to the control unit (25a) for the IR transmitter (26), said information including a wake-up signal for the vehicle communication unit (9) and command signals for the vehicle communication unit (9) so as to prompt the latter to identify and output stored information, in particular information on the state and on toll transactions.

2. The communication device according to claim 1, **characterized in that** the directional characteristic is defined for a selective communication at distances in the order of approximately 100 m.

3. The communication device according to claim 1 or 2, **characterized in that** the IR-receiver is provided with a receiving angle of from 0.5° to 4°.

4. The communication device according to claim 3, **characterized in that** the receiving angle is from 0.8° to 2.5°.

5. The communication device according to any one of claims 1 to 4, **characterized in that** the IR-transmitter is provided with an angle of radiation of from 0.5° to 4°.

6. The communication device according to claim 5, **characterized in that** the angle of radiation is from 0.8° to 2.5°.

7. The communication device according to any one of claims 1 to 6, **characterized in that** the indication unit (16, 18) comprises a display, in particular an LCD display (16).

8. The communication device according to any one of claims 1 to 7, **characterized in that** the indication unit (16, 18) comprises an acoustic indicating means, e.g. a buzzer (18).

9. The communication device according to any one of claims 1 to 8, **characterized in that** the processing unit (25b) is formed by a processor (25).

10. The communication device according to any one of claims 1 to 9, **characterized in that** the control unit (25a) for the transmitter is formed by a processor (25), preferably by the same processor (25) that forms the processing unit (25b).

11. The communication device according to claim 9 or 10, **characterized in that** the processor (25) is provided with a memory (27, 28) for information to be transmitted and received, respectively.

12. The communication device according to claim 10 or 11, **characterized in that** the processor (25) is connected to an input unit (17), in particular keys, for inputting information and instructions.

13. The communication device according to any one of claims 1 to 12, **characterized in that** the control unit for the IR transmitter (26) has an associated trigger-like switch (19) for triggering the IR transmitter (26) for radiating electromagnetic waves.

14. The communication device according to any one of claims 9 to 13, **characterized in that** a date and clock indication fed by a clock-signal generator of the processor (25) is provided.

15. The communication device according to any one of claims 1 to 14, **characterized by** a memory (27) for storing a toll-site identification.

## Revendications

1. Dispositif de communication mobile sans fil à infrarouge (IR) (8), prévu pour communiquer avec des appareils de communication IR (9) dans des véhicules (5, 6, 7), avec un émetteur IR (26) contenant une diode IR et avec un récepteur IR (29) contenant une diode photosensible pour des ondes électromagnétiques contenant des informations, et avec une unité de commande (25a) pour la commande de l'émetteur IR (26), **caractérisé en ce que** l'émetteur IR (26) et / ou le récepteur IR (29) comportent une optique de focalisation (14, 15) prévue pour que sa caractéristique directionnelle (10, 10') soit réglable pour une distance (D) maximale respectivement définie entre 20 m et 200 m entre l'émetteur IR (26) et les appareils de communication IR (9) dans des véhicules (5, 6, 7), de manière à permettre une communication sélective avec un appareil de communication IR sélectionné d'un véhicule, **en ce que** sont prévues une unité de visée optique (13) ainsi qu'une unité d'indication (16, 18) reliée par une unité de traitement (25b) au récepteur IR (29), et **en ce qu'**une mémoire (28) pour des informations de signal d'émission prescrites est affectée à l'unité de commande (25a) pour l'émetteur IR (26), avec un signal de réveil pour l'appareil de communication (9) de véhicule et avec des signaux d'instruction pour l'appareil de communication (9) de véhicule pour inciter celui-ci à l'identification et à la délivrance d'informations mémorisées, en particulier telles que des informations d'état et des informations sur des transactions de péage.

2. Dispositif de communication selon la revendication 1, **caractérisé en ce que** la caractéristique directionnelle pour une communication sélective est fixée à des distances d'un ordre de grandeur d'une centaine de mètres.

3. Dispositif de communication selon la revendication 1 ou la revendication 2, **caractérisé en ce que** le récepteur IR est prévu avec un angle de réception compris entre 0,5° et 4°.

4. Dispositif de communication selon la revendication 3, **caractérisé en ce que** l'angle de réception est compris entre 0,8° et 2,5°.

5. Dispositif de communication selon l'une des revendications 1 à 4, **caractérisé en ce que** l'émetteur IR est prévu avec un angle d'émission compris entre 0,5° et 4°.

6. Dispositif de communication selon la revendication 5, **caractérisé en ce que** l'angle d'émission est compris entre 0,8° et 2,5°.

7. Dispositif de communication selon l'une des revendications 1 à 6, **caractérisé en ce que** l'unité d'indication (16, 18) comporte un écran, en parti culier un écran LCD (16).

8. Dispositif de communication selon l'une des revendications 1 à 7, **caractérisé en ce que** l'unité d'indication (16, 18) comporte un dispositif d'indication acoustique tel qu'un vibreur (18).

9. Dispositif de communication selon l'une des revendications 1 à 8, **caractérisé en ce que** l'unité de traitement (25b) est formée par un processeur (25).

10. Dispositif de communication selon l'une des revendications 1 à 9, **caractérisé en ce que** l'unité de commande (25a) pour l'émetteur est formée par un processeur (25), de préférence par le même processeur (25) qui forme l'unité de traitement (25b).

11. Dispositif de communication selon la revendication 9 ou la revendication 10, **caractérisé en ce que** le processeur (25) est pourvu d'une mémoire (27, 28) pour des informations à émettre ou à recevoir.

12. Dispositif de communication selon la revendication 10 ou la revendication 11, **caractérisé en ce que** le processeur (25) est relié à une unité de saisie (17), en particulier des touches, pour l'entrée d'informations et d'instructions.

13. Dispositif de communication selon l'une des revendications 1 à 12, **caractérisé en ce que** l'unité de commande pour l'émetteur IR (26) est un interrupteur (19) en forme de détente pour la commutation de l'émetteur IR (26) pour l'émission d'ondes électromagnétiques.

14. Dispositif de communication selon l'une des revendications 9 à 13, **caractérisé en ce qu'**il est prévu une indication de date et d'heure alimentée par un générateur de signal d'horloge du processeur (25).

15. Dispositif de communication selon l'une des revendications 1 à 14, **caractérisé par** une mémoire (27) pour la sauvegarde d'une identification de poste de péage.
